# EUROPÄISCHE PATENTSCHRIFT

(11) **EP 0 863 628 B1**
(45) Veröffentlichungstag und Bekanntmachung des Hinweises auf die Patenterteilung: **19.12.2001**
(21) Anmeldenummer: 98100693.5
(22) Anmeldetag: 16.01.1998
(51) Int. Cl.: H04B 10/17

(54) **Verfahren und Anordnung zum Betreiben eines Laser-Sendesystems für optische Freiraum-Kommunikation**
Method and means to operate a laser emitter system for optical free space communication
Méthode et dispositif pour l'opération d'un système d'émission à laser pour la communication optique dans l'espace libre

(30) Priorität: 07.03.1997 CH 54997
(43) Veröffentlichungstag der Anmeldung: 09.09.1998
(73) Patentinhaber: Contraves Space AG, 8052 Zürich (CH)
(72) Erfinder: Fischer, Edgar, Dr. Ing., 8555 Müllheim Dorf (CH); Wandernoth, Bernhard, Dr. Ing., 9533 Kirchberg (CH); Mayor, Jean-Michel, 1400 Yverdon-les-Bains (CH); Schmid, Beat, 8180 Bülach (CH)
(74) Vertreter: Hotz, Klaus, Dipl.-El.-Ing./ETH

(56) Entgegenhaltungen:
- EP-A- 0 670 642
- GB-A- 2 267 006
- US-A- 4 556 980
- US-A- 5 136 598
- US-A- 5 264 960
- KRAINAK M A: "INTERSATELLITE COMMUNICATIONS OPTOELECTRONICS RESEARCH AT THE GODDARD SPACE FLIGHT CENTER" PROCEEDINGS OF THE NATIONAL TELESYSTEMS CONFERENCE (NTC), WASHINGTON, MAY 19 - 20, 1992, Nr. -, 19.Mai 1992, INSTITUTE OF ELECTRICAL AND ELECTRONICS ENGINEERS, Seiten 14.9-14.12, XP000342462
- "Monolithic Glass Block Lasercom Terminal: Hardware proof of concept and test results", Carlson R T; Drake M D; Jaeger J L, SPIE Proc Vol 2381, pages 90-102, 1985

## Beschreibung

Die vorliegende Erfindung betrifft ein Verfahren und eine Anordnung zum Betreiben eines Laser-Sendesystems für optische Freiraum-Kommunikation, insbesondere in Kombination mit dem Erzeugen verstärkten Laserlichts unter Weltraumbedingungen.

Systeme zur optischen Freiraum-Kommunikation zwischen Satelliten sowie zwischen Satellit und Bodenstation werden in naher Zukunft eine wichtige und an Bord der Satelliten eine gewichtssparende Ergänzung zur bestehenden Mikrowellentechnik darstellen. Sogenannte optische Terminals bestehen aus einem oder mehreren Teleskopen, welche den Winkelbereich des Gesichtsfeldes eines optischen Empfängers in Richtung einer Gegenstation einschränken sowie für eine gerichtete Abstrahlung von zu sendenden Signale sorgen. Weiterhin sind mehrere bewegliche Spiegel vorhanden, durch welche die Ausrichtung der Sende- und Empfangsrichtung vorgenommen wird. Neben der direkten Detektion der optischen Strahlung des Senders der Gegenstation als Übertragungsverfahren spielt auch die kohärente Überlagerung empfangenen Lichtes mit dem gleichfrequenten Licht eines Lokaloszillator-Lasers eine bedeutende Rolle, da neben einer grossen Empfindlichkeit für das zu detektierende Signal die Unempfindlichkeit für Störungen durch im Hintergrund vorhandene Strahlung ins Gewicht fällt.

Kohärente Verfahren benötigen zusätzlich einen Lokaloszillator-Laser, dessen Licht auf dem Photodetektor des Empfängers mit dem empfangenen Licht überlagert wird. Für all diese Zwecke stehen mehrere Lasertypen zur Auswahl. Gaslaser bieten den Vorteil, wegen der sogenannten homogenen spektralen Verbreiterung ihres optischen Gewinns, nur auf einer einzigen optischen Frequenz Licht zu emittieren, obwohl Resonatoren von Lasern ohne besondere Massnahmen Resonanzen auf einer ganzen Reihe von äquidistanten Frequenzen aufweisen. Allerdings weist dieser Lasertyp eine für Anwendungen im Weltraum völlig unzureichende Lebensdauer und Zuverlässigkeit auf. Die durch ihre extensive Anwendung in der faseroptischen Kommunikation einen hohen Entwicklungsstand erreicht habenden Diodenlaser stellen zumindest für einfache mit Intensitätsmodulation arbeitende Systeme eine zudem noch Platz und Gewicht sparende Alternative dar, eignen sich aber trotz des inzwischen auch hier erreichten Betriebs auf nur einer optischen Frequenz im allgemeinen noch nicht für kohärente Übertragungsverfahren mit Phasenmodulation, abgesehen von komplizierten Konstruktionen mit grossen angekoppelten zusätzlichen Resonatoren. Der Grund liegt in der noch zu grossen spektralen Breite dieser einen abgestrahlten optischen Frequenz. Zwar arbeiten faseroptische kohärente Übertragungssysteme auch mit handelsüblichen Diodenlasern, wobei allerdings aufgrund leitungsgebundener Übertragung bei relativ hoher optischer Leistung detektiert wird, und wobei sich zusätzlich die Anwendung auf Frequenzmodulation sowie differentielle Phasenmodulation beschränkt. Bei letzterer Modulationsart wird die Änderung des binären Zustands eines zu übertragenden Datensignals durch einen modulierten Phasensprung des ausgesandten Lichts um 180 Grad übertragen. Im optischen Empfänger wird der Lichtstrom in zwei Teile zerlegt und mit einer gegenseitigen Zeitverschiebung der Dauer eines Datensymbols auf eine gemeinsame Photodiode geschickt. Das Licht beinhaltet somit seinen eigenen Lokaloszillator, wobei der Vorteil dieses Verfahrens darin besteht, das die Phase des verwendeten unmodulierten Lichts nur im Rahmen der Dauer eines Datensymbols stabil sein muss.

Die bei Freiraumübertragung vorhandene störende Hintergrundstrahlung sowie die meistens sehr geringe Leistung des empfangenen Signals erfordern jedoch eine optische Bandbreite des unmodulierten Signals, die wesentlich niedriger ist als die Modulationsbandbreite. Dies sind Kriterien, die zusammen mit geringer Grösse und niedrigem Gewicht am besten durch diodenlasergepumpte Festkörperlaser erfüllt werden können. Bestehende Ansätze, die zum Betrieb notwendigen Lasersysteme in ein Terminal zur optischen Freiraum-Kommunikation zu integrieren, sind von Carlson et al. sowie Marshalek et al. beschrieben (R.T.Carlson et al., Monolithic glass block lasercom terminal: hardware proof of concept and test results, SPIE vol. 2381, Free-space laser communication technologies VII, 7-8 Febr, 1995, San Jose, California, p. 90-102; R. G. Marhsalek et al., Lightweight, high- data-rate laser communications terminal for low-Earth-orbit satellite constellations, SPIE vol. 2381, Free-space laser communication technologies VII, 7-8 Febr, 1995, San Jose, California, p. 72-82).

Beide Autorengruppen beschreiben Lasersysteme, die mechanisch an die Optik des Terminals angekoppelt sind und ihre Lichtemission über kollimierte Strahlen in die Optik führen. Allerdings sind hierbei immer Diodenlaser zur Anwendung gekommen. Diodenlasergepumpte Festkörperlaser weisen ein grösseres Volumen und eine geringere Effizienz auf, erzeugen also ein grösseres Mass an Abwärme als vergleichbare Diodenlaser. Das höhere Mass an in der Nähe des optischen Systems produzierter Wärme erweist sich als Risiko für den störungsfreien Betrieb der Optik. Ein weiteres Problem stellt die mangelhafte Modulierbarkeit von diodengepumpten Festkörperlasern dar. Im Unterschied zu Diodenlasern verharrt das den optischen Gewinn erzeugende Medium nach Zufuhr von Pumpenergie relativ lange in einem angeregten Zustand. Weiterhin ist der Resonator solcher Laser wesentlich grösser als der von Diodenlasern. Folglich sind z.B. für Amplitudenmodulation Grenzfrequenzen von etwa 100 kHz die Regel. Die deshalb nötige externe Modulation ist auch recht schwierig zu vollführen, da eine hohe optische Leistung handzuhaben ist, was den Einsatz elektrooptischer Modulatoren mit niedrigerer Grenzfrequenz bedingt.

Die externe Modulation von Laserlicht kann mit einer hohen Grenzfrequenz in Modulatoren vorgenommen werden, in welchen das Licht in einem Wellenleiter geführt wird, der einen geringen gegenseitigen Abstand der die modulierende Spannung führenden Elektroden und somit eine geringere Modulationsspannung erlaubt. Da dieses Verfahren wegen der durch den geringen Querschnitt des optischen Wellenleiters bedingten starken Überhöhung der optischen Intensität nur niedrige optische Leistungen zulässt, muss das modulierte optische Signal nachverstärkt werden. Ansätze hierzu bestehen zum einen in der Übernahme von inzwischen in der fasergebundenen optischen Kommunikation bewährten Verfahren und Vorrichtungen, z. B. durch Nachverstärkung des modulierten optischen Signals mittels eines Erbium dotierten Faserverstärkers (T. Araki, M. Yajima, S. Nakamori, Y. Hisada, Laser transmitter systems for high-data-rate optical inter-orbit communications, SPIE vol. 2381, Free-space laser communication technologies VII, 7-8 Febr, 1995, San Jose, California, p. 264-272).

Aus Diodenlaser-gepumpten Festkörperlasern lassen sich auch entsprechende Wanderwellen-Verstärker ableiten, womit speziell zur Nachverstärkung von Licht aus mit derselben Technologie arbeitenden Lasern geeignete Vorrichtungen zur Verfügung stehen, besonders für die wegen ihrer geringen spektralen Breite für die optische Freiraum-Kommunikation sehr nützlichen Diodenlaser-gepumpten Neodym-YAG-Festkörperlaser.

Zur Erzielung einer hohen Verstärkung bei gleichzeitig niedriger optischer Pumpleistung muss das zu verstärkende Licht auf möglichst vielen Wegen durch die durch Pumplicht bestrahlte Zone eines verstärkenden Mediums geleitet werden. Hierdurch besteht bei jeweils konstanter Volumendichte angeregter Atome für jedes eingekoppelte Photon des zu verstärkenden Lichts ein der Anzahl der Durchgänge entsprechendes Vielfaches der Wahrscheinlichkeit eines einzelnen Durchgangs, zusätzliche Photonen zu generieren. Trotz niedriger Pumpleistung kann somit ein erstaunlicher Verstärkungsfaktor erzielt werden. Allerdings sind die dem Stand der Technik entsprechenden Vorrichtungen aus mehreren viel Raum und Masse beanspruchenden Elementen aufgebaut, die dadurch Raumfahrt - spezifischen Anforderungen nur schlecht genügen. Auch spezielle Entwicklungen bergen das Risiko ungenügender mechanischer Belastbarkeit (T. J. Kane, E. A. P. Cheng, B. Nguyen, Diode-pum-ped ND:YAG amplifier with 52 - dB gain, SPIE vol. 2381, Free-space laser communication technologies VII, 7-8 Febr, 1995, San Jose, California, p. 273 - 284; T. E. Olson, T. J. Kane, W. M. Grossmann, H. Plaessmann, Multipass diode - pumped ND:YAG optical amplifiers at 1.06 mu m and 1.32 mu m, Optics Letters, Vol. 6, No. 5, May 1994, p. 605 - 608). Ein zusätzliches Problem für Raumfahrtanwendungen besteht darin, dass auch die zur Erzeugung des Pumplichts verwendeten Diodenlaser eine begrenzte Lebensdauer aufweisen. Folglich ist es notwendig, für jeden Diodenlaser-gepumpten Festkörperlaser und jeden Diodenlaser- gepumpten optischen Verstärker mehrere Diodenlaser in Redundanz bereitzuhalten, um Ausfälle ersetzen zu können.

Es sind mehrere Anordnungen bekannt, in denen zur direkten Verstärkung mittels optischer Halbleiterverstärker Halbleiterstrukturen verwendet werden, die eine hohe optische Ausgangsleistung ermöglichen. So werden optische Halbleiterverstärker beschrieben, welche entlang eines optischen Gewinn erzeugenden, elektrisch gepumpten Halbleiterübergangs optische Wellenleiter aufweisen, die infolge ihrer zur Ausbreitungsrichtung seitlichen Ausdehnung entlang des Halbleiterübergangs mehrere Moden des zu verstärkenden Lichts führen könnten. Die genaue Kontrolle des den Halbleiter durchfliessenden Stroms bedingt laut **US-PS 5,539,571** trotzdem hohe Lichtleistung des nahezu beugungsbegrenzten stark astigmatischen den Halbleiterchip verlassenden Lichtstrahls. Die Verstärker können einen breiten mehrmodigen rechteckigen optischen Wellenleiter enthalten, welcher sich aber auch trapez-förmig ausführen lässt, um sich dem beugungsbedingten Verlauf des Lichts anzupassen. Unter Ausnutzung der speziellen Form dieser Wellenleiter lassen sich hiermit Laser realisieren, die einen instabilen Resonator beinhalten **(US-PS 5,392,308),** besonders stabil in der optischen Frequenz ihrer Emission sind **(US-PS 5,537,432),** oder auch an externe optische Resonatoren angekoppelt werden können **(US-PS 5,499,261).** Entsprechende Linsensysteme zur Formung fokussierter oder kollimierter Lichtstrahlen aus dem divergenten, stark astigmatischen Lichtstrahl solcher Verstärker sind in **US-PS 5,321,718** angegeben.

Aus der US-Patentschrift **Nr. - 5,264,960** ist eine optische Vorrichtung mit einer Wellenleiterstruktur zur Verschiebung einer Welle bekannt. Diese Vorrichtung umfasst einen ersten Generator, bestehend aus einer Laser/Modulator-Einheit für Datensignale mit einer ersten Wellenlänge, und einen zweiten Generator zur Erzeugung einer optischen Dauerwelle mit einer zweiten Wellenlänge. Durch die Vorrichtung soll das zweite optische Signal mit Änderungen geprägt werden, die sich aus der Enveloppe des ersten optischen Signals ergeben.

Eine weitere US-Patentschrift **(US 5,457,569)** betrifft einen Halbleiterverstärker oder Laser mit integrierten Linsen, wobei ein optischer Wellenleiter verwendet wird, der sich längs der Ausbreitungsrichtung von in ihm geführten Lichtwellen in seinem Querschnitt ändert, und wobei der optische Wellenleiter von einer elektrische Energie zuführenden elektrisch leitfähigen Schicht überzogen ist. Bei diesem Laser sollen die Linsen und der optische Verstärker in ein gemeinsames Substrat monolithitsch integriert sein.

Unter Ausnutzung des Standes der Technik der optischen Halbleiterverstärker sind also im Vergleich zu bestehenden Ansätzen mittels diodenlasergepumpter Festkörperverstärker bedeutende Verbesserungen erzielbar.

Folglich ist es Aufgabe der im folgenden beschriebenen Erfindung, die Nachteile des Standes der Technik zu vermeiden, indem durch das erfindungsgemässe Verfahren und eine verbesserte Vorrichtung verstärktes, moduliertes Licht zur Abstrahlung durch eine optisches Kommunikations-Terminal zur Verfügung gestellt wird.

Diese Aufgabe wird erfindungsgemäß durch ein Verfahren nach Anspruch 1 sowie durch eine Anordnung zur Durchführung dieses Verfahrens nach Anspruch 3 gelöst.

Die Erfindung betrifft ein Verfahren zur Erzeugung eines modulierten Lichtsignals zur Aussendung durch ein optisches Terminal, vorzugsweise zur optischen Freiraum-Kommunikation zwischen Satelliten.

Die hierzu verwendete Vorrichtung besteht alternativ aus einem Diodenlaser oder einem Diodenlaser-gepumpten Festkörperlaser, dessen Licht durch einen optischen Halbleiterverstärker verstärkt wird. Die Modulation des Lichts geschieht z. B. durch direkte Modulation einer als Oszillator verwendeten Laserdiode über deren Speisestrom, wobei Amplituden- oder Frequenzmodulation vorgesehen ist. Weitere Methoden zur Modulation des Lichts beinhalten passive elektrooptische Materialien, welche zwischen dem als Oszillator verwendeten Diodenlaser oder Diodenlaser-gepumpten Festkörperlaser sowie dem optischen Halbleiterverstärker angebracht sind und durch ein von einem Datensignal gesteuertes elektrisches Feld die Phasenmodulation des Laserlichtes vor seiner Verstärkung erlaubt. Mögliche Ausführungsformen sind einfache Materialsegmente, die mit Elektroden versehen sind und von einem kollimierten Strahl des zu modulierenden Lichts durchstrahlt werden sowie mit Lichtwellenleitern verbundene Wellenleiterstrukturen in entsprechenden Materialien, wobei die zum Aufbau des modulierenden Feldes erforderlichen Elektroden am Rand des Wellenleiters angebracht sind und die Form einer Hochfrequenzleitung besitzen können, welche das modulierende Feld in Form einer der Gruppengeschwindigkeit des zu modulierenden Lichts angepassten Wanderwelle entlang des optischen Wellenleiters führen.

Amplitudenmodulation kann durch elektrisch steuerbare optische Absorber oder optische Verstärker geschehen, die ebenfalls in den bei Phasenmodulatoren bekannten Ausführungsformen verwendet werden können. Insbesondere ist die Phasenmodulation einer einen optischen Halbleiterverstärker durchstrahlenden Lichtwelle durch schwache Modulation des Speisestroms des optischen Halbleiterverstärkers möglich, wobei eine gewisse parasitäre Amplitudenmodulation des Lichts auftritt. Parasitäre Amplitudenmodulation kann durch Hintereinanderschaltung mehrerer antagonistisch modulierter verschieden strukturierter optischer Halbleiterverstärker reduziert werden. Weiterhin kann die Modulation in Amplitude oder Phase zunächst in einem optischen Halbleiterverstärker niedriger Sättigungsleistung durchgeführt werden, um das modulierte Licht anschliessend in einem mit Gleichstrom betriebenen Endverstärker auf Sendeleistung anzuheben. Eine derartige Struktur kann aus diskreten optischen Halbleiterverstärkern zusammengesetzt werden oder in Form einer integrierten optischen Wellenleiterschaltung ausgeführt sein. Als optische Halbleiterverstärker zur Erzielung des abzustrahlenden Leistung werden Strukturen mit mehrmodigen optischen Wellenleitern verwendet. Die Wellenleiter können hierbei rechtekkige Form besitzen oder sich in Ausbreitungsrichtung des zu verstärkenden Lichts kontinuierlich aufweiten. Die Aufweitung des optischen Wellenleiters erfolgt entlang seiner Länge im allgemeinen linear, dies aber nur der Einfachheit der Ausführung halber, das eigentliche Kriterium für das Mass der Aufweitung des Wellenleiters besteht in der Überschreitung der Divergenz des über die schmalere seiner beiden Aperturen eingekoppelten Lichts. Eine weitere Ausführung benutzt einen Wellenleiter, welcher sich in seiner Breite exponentiell aufweitet und das sich in ihm ausbreitende Licht in beiden zur Ausbreitungsrichtung orthogonalen Richtungen führt. Zusätzlich stellt eine zur Zuführung von Speisestrom an den im optischen Wellenleiter integrierten, optische Verstärkung bewirkenden Halbleiterübergang vorgesehener Metallkontakt durch seine dem Verlauf des optischen Wellenleiters angepasste Form einen Hochfrequenz-Streifenleiter dar, welcher in der Gruppengeschwindigkeit des in ihm übertragenen Modulationssignals an die des sich im optischen Wellenleiter ausbreitenden Lichts angepasst ist. Hierdurch wird eine breitbandige Amplituden - oder Phasenmodulation durch einen optischen Halbleiterverstärker hoher Ausgangsleistung ermöglicht.

Da Halbleiterverstärker eine relativ hohe Ausfallwahrscheinlichkeit haben, ist in einer Weiterbildung der erfindungsgemässen Vorrichtung die mehrfache Redundanz optischer Halbleiterverstärker vorgesehen. Sofern die entsprechenden Baugruppen über Lichtwellenleiter miteinander verbunden sind, kann zwischen mehren optischen Halbleiterverstärkern oder anderen gleichartigen Baugruppen des Systems mittels elektromechanischen oder elektrooptischen Lichtwellenleiterschaltern gewählt werden. Unter Inkaufnahme zusätzlicher optischer Verluste können diese Lichtwellenleiterschalter durch Sternkoppler ersetzt werden. So können beispielsweise sogar N redundante optische Sender mit N redundanten nachfolgenden Baugruppen verknüpft werden, wobei jede ausfallsträchtige Mechanik oder Elektronik entfällt. Dieses Verfahren empfiehlt sich bei seriellen Anordnungen, sofern die in den jeweils nachfolgenden Baugruppen benötigte optische Eingangsleistung niedrig ist.

Ein Erfindungsgedanke bei Übertragung zwischen den Baugruppen durch kollimierte Lichtstrahlen besteht in der Festlegung der Polarisation der kollimierten Lichtstrahlen an den Schnittstellen eines speziellen elektromechanischen optischen Umschalters, in welchem einlaufende kollimierte Lichtstrahlen zunächst durch einen von in einer Reihe angeordneten Polarisationsstrahlteilern in Richtung eines benachbarten Polaristionsstrahlteilers deflektiert und anschliessend mittels einer Halbwellenplatte in seiner Polarisation um 90 Grad gedreht wird, um daraufhin in Richtung des Ausgangsterminals des elektromechanischen Umschalters alle übrigen Polarisationsstrahlteiler zu passieren, ohne in ihnen deflektiert zu werden. Kollimierte Lichtstrahlen an den verschiedenen Eingangsterminals dieses elektromechanischen Umschalters können zum Ausgangsterminal durchgeschaltet werden, indem jeweils zwischen den ersten beiden durch den in das entsprechende Eingangsterminal gerichteten kollimierten Lichtstrahl durchstrahlten Polarisationsstrahlteiler eine Halbwellenplatte geschoben wird. Dieser elektromechanische/optische Umschalter kann in Umkehrung auch zur Umschaltung eines kollimierten Lichtstrahls von einem Eingangsterminals des Systems auf mehrere Ausgangsterminals verwendet werden, da wie für alle linearen Systeme Reziprozität besteht.

Ein Vorteil dieses elektromechanischen Umschalters besteht in der Tatsache, dass die einzigen beweglichen Teile dieser Vorrichtung Halbwellenplatten sind, welche als planparallele Platten ausgeführt sind. Die ungenaue Ausrichtung dieser Platten macht sich daher infolge ihrer im allgemeinen geringen Dicke in Durchstrahlungsrichtung nur in einer geringfügigen Parallelverschiebung des durchgeschalteten kollimierten Lichtstrahls bemerkbar. Als Vorteile des gesamten Verfahrens und der dazu notwendigen Vorrichtungen lassen sich ihre gegenüber mit Diodenlaser - gepumpten Festkörperverstärkern konzipierten Verfahren und den dazugehörigen Vorrichtungen eine erhöhte mechanische Stabilität, geringere Abmessungen und ein niedrigeres Gewicht anführen.

Ein weiterer Vorteil lässt sich aus der Tatsache ableiten, dass ein Diodenlaser - gepumpter Festkörperverstärker die Emission von Diodenlasern als Energiequelle benötigt. Die Zuverlässigkeit von Diodenlasern ist mit der von optischen Halbleiterverstärkern vergleichbar. Folglich kann das erfindungsgemässe Verfahren, da für einen Diodenlaser - gepumpten Festkörperlaser auch Redundanz bezüglich der Diodenlaser vorhanden sein muss, infolge der geringeren Komplexität eine erhöhte Zuverlässigkeit des Gesamtsystems vorausgesetzt werden. Die mit der Technologie der Diodenlaser arbeitenden optischen Halbleiterverstärker sorgen mit einem hohen Wirkungsgrad von etwa 30% für eine effiziente direkte Umsetzung von elektrischer Leistung in nutzbare Lichtleistung. Als Vorteil fällt ausserdem noch ins Gewicht, dass bei gleicher optischer Leistung des nutzbaren Lichts erheblich weniger Abwärme produziert wird.

Weitere Einzelheiten, Merkmale und Vorteile der Erfindung ergeben sich nicht nur aus den Ansprüchen und diesen zu entnehmenden Merkmalen -für sich und/oder in Kombination, sondern auch aus der nachfolgenden Beschreibung bevorzugter Ausführungsbeispiele.

Es zeigen:
- **Fig. 1**: ein Blockschema eines optischen Sende-Systems,
- **Fig. 2**: ein alternatives Blockschema eines optischen Sendesystems,
- **Fig. 3**: ein weiteres Blockschema eines optischen Sendesystems,
- **Fig. 4**: ein schematisch dargestelltes optisches Sendesystem mit mehreren redundant eingefügten optischen Verstärkern,
- **Fig. 5**: ein schematisch dargestelltes optisches Sendesystem mit mehreren redundant eingefügten optischen Verstärkern und teilweise in kollimierten Strahlen geführtem Licht,
- **Fig. 6**: eine schematische Darstellung eines elektromechanischen Umschalters für kollimierte Lichtstrahlen,
- **Fig. 7**: eine Anordnung von Halbwellenplatten,
- **Fig. 8**: eine Darstellung eines weiteren elektromechanischen Umschalters für kollimierte Lichtstrahlen,
- **Fig. 9-21**: verschiedene Ausführungsformen von optischen Halbleiterverstärkern,
- **Fig. 22-25**: verschiedene Ausführungsformen von optischen Systemen zur Kollimation divergenter astigmatischer Lichtstrahlen, und
- **Fig. 26 + 27**: eine erfindungsgemässe Ausführungsform in Aufsicht und Seitenansicht.

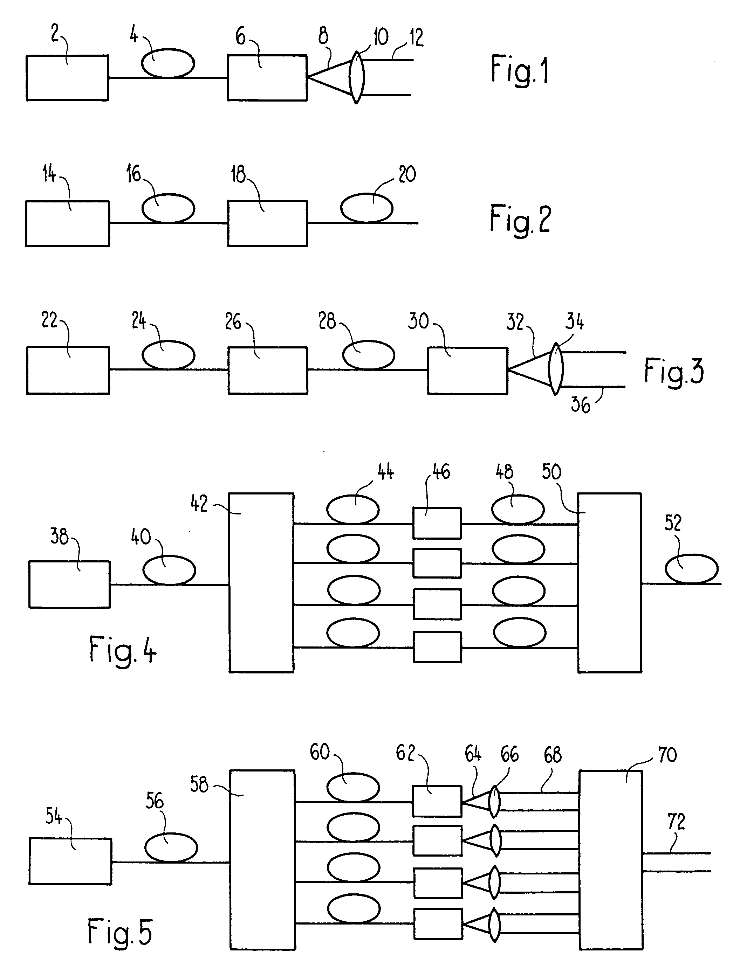

In **Fig. 1** ist ein Blockschema eines optischen Sendesystems dargestellt, welches aus einem als optischem Oszillator wirkenden Laser **2** und einem optischen Halbleiterverstärker **6** besteht, die durch eine polarisationserhaltende optische Faser **4** miteinander verbunden sind. Der Laser **2** kann als diodenlasergepumpter Festkörperlaser ausgeführt sein, was eine geringe optische Bandbreite des von diesem Laser emittierten unmodulierten Lichts bedingt. Weiterhin sind Diodenlaser denkbar, welche entweder mit höherer optischer Bandbreite emittieren oder durch einen externen Resonator schmalbandiger emittieren. Im letzteren Falle sowie bei Verwendung eines Festkörperlasers kann kein schnelles Datensignal durch direkte Modulation des Lasers übertragen werden. In diesem Fall kann sowohl Phasen- als auch Amplitudenmodulation durch die Modulation des Speisestroms des optischen Halbleiterverstärkers **6** erzielt werden. Der Laser **2** beinhaltet zusätzlich ein optisches System, um die Emission des Lasers in die polarisationserhaltende optische Faser **4** zu überführen. Die optische Faser **4** führt entweder direkt in den optischen Halbleiterverstärker **6** oder wird ebenfalls mit einem optischen System in den Verstärker eingekoppelt. Der aus dem optischen Halbleiterverstärker austretende Lichtstrahl **8** hat durch die besondere Form der Apertur von sehr leistungsfähigen optischen Halbleiterverstärkern astigmatische Struktur. Ein spezielles optisches Linsensystem **10** gewährleistet die Umformung des Lichtstrahls **8** in einen kollimierten Lichtstrahl **12** mit gleichmässiger seitlicher Ausdehnung. Der kollimierte Lichtstrahl **12** wird nach weiteren optischen Umformungen abgestrahlt. Die Abweichung von einem idealen gaussschem Strahl ist nach Empfang in einer sich im Fernfeld des Senders befindenden Gegenstation vernachlässigbar klein, d. h., auf körperliche Blenden zur Strahlreinigung kann verzichtet werden.

**Fig. 2** zeigt ein alternatives Konzept, bei welchem das emittierte Licht eines Lasers **14** in eine polarisationserhaltende optische Faser **16** gekoppelt wird, die zu einem optischen Halbleiterverstärker **18** führt, dessen Ausgang an eine weitere polarisationserhaltende optische Faser **20** angekoppelt ist. Das verstärkte Licht wird durch die optische Faser **20** zu einem optischen System geführt, durch welches das Licht nach dessen Umwandlung zu einem kollimierten Strahl abgestrahlt wird.

In **Fig. 3** ist eine weitere Realisation eines Sendesystems schematisch dargestellt. Ein Laser **22** erzeugt unmoduliertes Licht, das in eine polarisationserhaltende optische Faser **24** eingekoppelt wird und über die Faser **24** einem elektrooptischen Modulator **26** zugeführt wird, der mittels eines Datensignals das eingekoppelte Licht in seiner Amplitude oder Phase beeinflusst. Als Modulator kommen Anordnungen aus Materialien in Frage, deren optische Brechzahl durch Anlegen eines elektrischen Feldes beeinflussbar ist, womit sich die Phase eines durch das Material durchtretenden optischen Feldes beeinflussen lässt. In interferometerartigen Anordnungen von Wellenleitern aus solchen Materialien lässt sich auch die Amplitude eines durch diese Anordnung hindurchtretenden optischen Feldes beeinflussen. Weiterhin sind Halbleiterverstärker mit relativ niedriger Ausgangsleistung verwendbar, deren Speisestrom moduliert wird. Durch grosse Modulation des Speisestroms lässt sich Amplitudenmodulation erzielen, während eine relativ geringe Modulation des Speisestroms neben einer schwachen Amplitudenmodulation des Lichtfeldes die Modulation seiner Phase bewirkt. Das modulierte Licht wird in eine weitere polarisationserhaltende optische Faser **28** gekoppelt und in einen optischen Halbleiterverstärker grosser Ausgangsleistung **30** geführt, dessen Speisestrom nicht moduliert wird. Ein aus diesem Verstärker austretender astigmatisch divergierender Lichtstrahl **32** wird durch ein spezielles Linsensystem **34** in einen kollimierten Lichtstrahl **36** mit gleichmässiger seitlicher Ausdehnung übergeführt. In Anlehnung an **Fig. 2** ist auch die Weiterführung des Lichtes in einer zusätzlichen polarisationserhaltenden optischen Faser möglich. Der optische Halbleiterverstärker **30** kann auch durch andersartige, schwer modulierbare optische Verstärker ersetzt werden. Die durch die polarisationserhaltenden optischen Fasern **4, 16, 24** und **28** hergestellten Verbindungen können auch über freie optische Verbindungen hergestellt werden (der Übersichtlichkeithalber ist dies jedoch zeichnerisch nicht dargestellt!).

**Fig. 4** stellt ein optisches Sendesystem mit mehreren redundant eingefügten optischen Verstärkern dar. Ein Laser **38** emittiert Licht in eine polarisationserhaltende optische Faser **40,** welche zu einem elektromechanischen bzw. elektrooptischen Umschalter **42** führt, der die wahlweise Verbindung der optischen Faser **40** mit weiteren polarisationserhaltenden optischen Fasern **44** ermöglicht. Das Licht des Lasers **38** wird dadurch durch einen der optischen Halbleiterverstärker **46** geführt, welche eingangs- und ausgangsseitig an die optischen Fasern **44** bzw. weitere polarisationserhaltende optische Fasern **48** angekoppelt sind. Die optischen Fasern **48** führen auf einen weiteren elektromechanischen bzw. elektrooptischen Umschalter **50,** der die jeweils lichtführende der optischen Fasern **48** mit einer weiteren polarisationserhaltenden optischen Faser **52** verbindet. Falls die Modulation des durch den Laser **38** erzeugten Lichts bereits im Laser selbst vorgenommen wird, der in diesem Falle ein einfacher Diodenlaser sein kann, sind die Verstärker **46** auch durch andere schwer modulierbare Typen ersetzbar. Weiterhin können die optischen Verstärker **46** auch als ein Gesamtsystem ausgeführt sein, das aus Modulator und nachgeschaltetem optischen Verstärker besteht.

**Fig. 5** zeigt ein optisches Sendesystem, in welchem das Licht nach Verstärkung in kollimierten Strahlen weitergeführt wird. Ein Laser **54** erzeugt Licht, das in eine polarisationserhaltende optische Faser **56** eingekoppelt wird und durch einen elektromechanischen bzw. elektrooptischen Umschalter **58** auf eine von weiteren polarisationserhaltenden optischen Fasern **60** weitergeführt wird. Dessen Ausgang tritt in einen von mehreren optischen Halbleiterverstärkern **62,** um an dessen Ausgang verstärkt in Form eines astigmatisch divergenten Lichtstrahls **64** auf ein spezielles optisches Linsensystem **66** zu treffen, welches den Lichtstrahl **64** in einen kollimierten, in seiner seitlichen Ausdehnung gleichmässigen Lichtstrahl **68** überführt. Der entsprechende kollimierte Lichtstrahl **68** trifft auf einen elektromechanischen Umschalter für kollimierte Lichtstrahlen **70,** um in einen ausgangsseitigen kollimierten Lichtstrahl **72** übergeführt zu werden. Weiterhin ist auch die ausschliessliche Verknüpfung von Baugruppen mittels freier optischer Verbindungen möglich, insbesondere dadurch, dass der elektromechanische bzw. elektrooptische Umschalter **58** durch einen weiteren elektromechanischen Umschalter für kollimierte Lichtstrahlen **70** ersetzt wird (Dies ist hingegen der Übersichtlichkeit wegen zeichnerisch nicht dargestellt).

Auch können diese elektromechanischen bzw. elektrooptischen Umschalter **50** und **70** durch sogenannte Sternkoppler ersetzt werden, womit jede ausfallsträchtige Mechanik und/oder Elektronik entfällt. (Auch dies ist der Übersichtlichkeit halber in den Zeichnungen nicht dargestellt!)

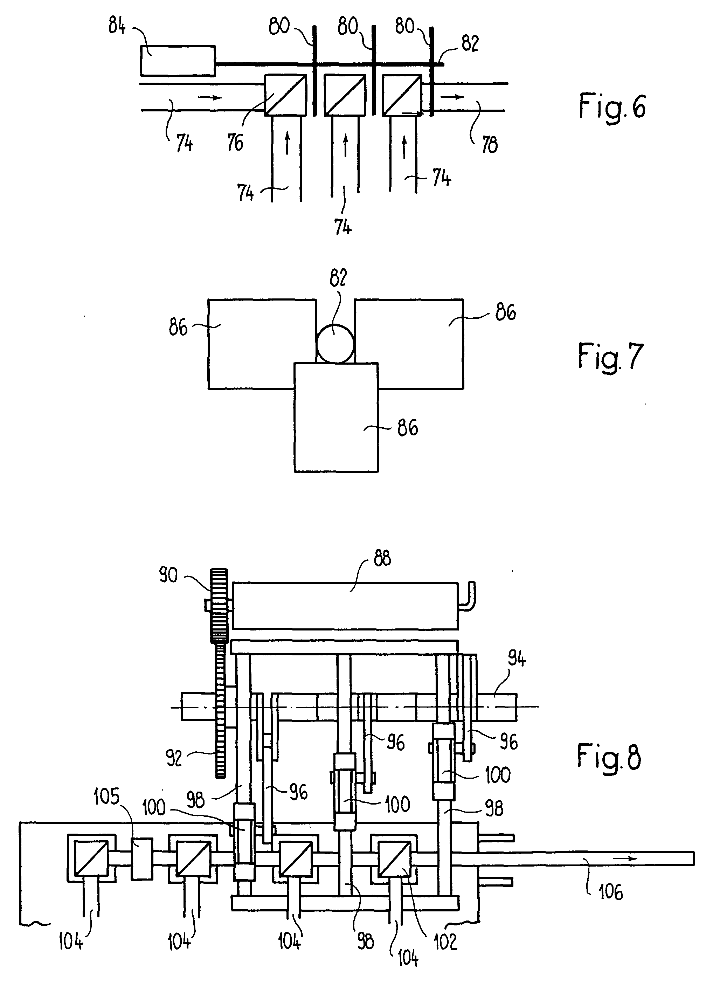

Eine genauere schematische Darstellung des elektromechanischen Umschalters für kollimierte Lichtstrahlen **70** ist in **Fig. 6** dargestellt. In die Vorrichtung einfallende kollimierte Lichtstrahlen **74** treffen zunächst auf Polarisationsstrahlteiler **76,** welche die Eigenschaft besitzen, an der in ihrem Innenbereich durch eine diagonale Linie dargestellten Grenzfläche Licht in Abhängigkeit von seiner Polarisation zu reflektieren oder in seiner Ausbreitung nicht zu beeinträchtigen. Der horizontal einfallende kollimierte Lichtstrahl **74** ist derart polarisiert, dass er ohne weitere besondere Beeinflussung alle Polarisationsstrahlteiler **76** unbeeinfllusst passiert und in einen Ausgangsstrahl **78** übergeht. Alle übrigen kollimierten Lichtstrahlen **74** sind derart polarisiert, dass sie an der Grenzfläche des ersten in ihrem Ausbreitungsweg liegenden Polaristionsstrahlteilers **76** in Richtung eines weiteren Polarisationsstrahlteilers **76** oder direkt in den Ausgangstrahl **78** deflektiert werden. Da ein weiterer Polarisationsstrahlteiler **76** den Lichtstrahl nochmals deflektieren würde, muss dessen Polarisation zwischen den beiden ersten aufeinander folgenden Polarisationsstrahlteilern **76** um 90 Grad gedreht werden. Bewerkstelligt wird dies durch eine Halbwellenplatte bzw. Kerr- oder Pockelszellen oder spezielle Vorrichtungen mit Flüssigkristallen. Halbwellenplatten besitzen die Eigenschaft, als optisches Medium je nach Polarisation von einfallendem Licht unterschiedliche optische Brechzahlen aufzuweisen. Wird die Polarisation eines Lichtstrahles zwischen die beiden Polarisationsrichtungen gestellt, bei denen das Maximum bzw. Minimum der polarisationsabhängigen optischen Brechzahl auftritt, ist die Polarisation der aus der Halbwellenplatte austretenden Lichtwelle um 90 Grad gedreht, da die beiden gleich grossen sich im jeweiligen Minimum bzw. Maximum der polarisationsabhängigen optischen Brechzahl fortgepflanzt habenden Teilwellen der einfallenden Lichtwelle sich, bedingt durch die zu diesem Zweck genau in ihrer Dicke festgelegten Halbwellenplatte, um eine halbe Wellenlänge gegeneinander verschoben haben und sich nun zu einer orthogonal polarisierten Lichtwelle wieder zusammensetzten. Der in **Fig. 6** horizontal einfallende kollimierte Lichtstrahl **74** bedarf keiner Korrektur seiner Polarisation, während alle übrigen kollimierten Lichtstrahlen **74** einmal in ihrer Polarisation um 90 Grad gedreht werden müssen. Der rechtsseitig vertikal einfallende kollimierte Lichtstrahl **74** muss nur in seiner Polarisation gedreht werden, um die Eigenschaften des Ausgangsstrahl **78** unabhängig vom geschalteten einfallenden Lichtstrahl **74** konstant zu halten. Halbwellenplatten **80** werden zwischen die Polarisationsstrahlteiler **76** gebracht, indem durch einen Servomotor **84** eine Achse **82** gedreht wird, an welcher die Halbwellenplatten **80** derart angebracht sind, dass sie sich gegeneinander verdreht auf Kreisflächen um die Achse **82** bewegen. Dadurch können durch Stellen des Winkels der Achse **82** alle Halbwellenplatten in ihre jeweilige Position zwischen oder neben einem Polarisationsstrahlteiler **76** gebracht werden, je nachdem, welcher kollimierte Lichtstrahl **74** durch die Beeinflussung mittels einer Halbwellenplatte in den Ausgangsstrahl **78** übergeführt werden soll.

**Fig. 7** zeigt die Anordnung von zu drehenden Halbwellenplatten **86** auf der Achse **82** des in **Fig. 6** dargestellten Systems. Die Achse **82** muss hinreichend genau gestellt werden, um die korrekte Polarisation des auf die Halbwellenplatten **86** einfallenden Lichts zu gewährleisten.

In **Fig. 8** ist ein erfindungsgemässes System dargestellt, in welchem das Problem des genau zu stellenden Winkels der Achse **82** in **Fig. 6** umgangen wird. Ein Servomotor **88** bewegt über ein aus einem ersten Zahnrad **90** und einem weiteren Zahnrad **92** bestehenden Getriebe eine Kurbelwelle **94,** an deren Kurbelzapfen Pleuelstangen **96** angreifen, die mit in Schlitten eingefügten Halbwellenplatten **100** verbunden sind. Diese bewegen sich entlang von Schienen **98,** welche nur eine Translationsbewegung der Halbwellenplatten **100,** aber keine Drehung im Verhältnis zur Polarisation von einfallenden kollimierten Lichtstrahlen **104** zulassen. Drehungen um eine andere als die durch die orthogonal zur Oberfläche der Halbwellenplatten **100** (beziehungsweise zur redundanten Halbwellenplatte **105**) einfallenden durch Polarisationsstrahlteiler **102** deflektierten einfallenden Lichtstrahlen **104** definierte Drehachse sind unkritisch, da die Halbwellenplatten **100** planparallel sind, Halbwellenplatten die also weder wie Prismen beugen noch Brechkraft besitzen. Schräg einfallende Lichtstrahlen werden in einem vom Einfallswinkel der Strahlen, der Brechzahl des Materials der Halbwellenplatte sowie dessen Stärke abhängigen, im allgemeinen im Vergleich zum Strahldurchmesser geringen Mass parallel versetzt in einen Ausgangsstrahl **106** übergeführt.

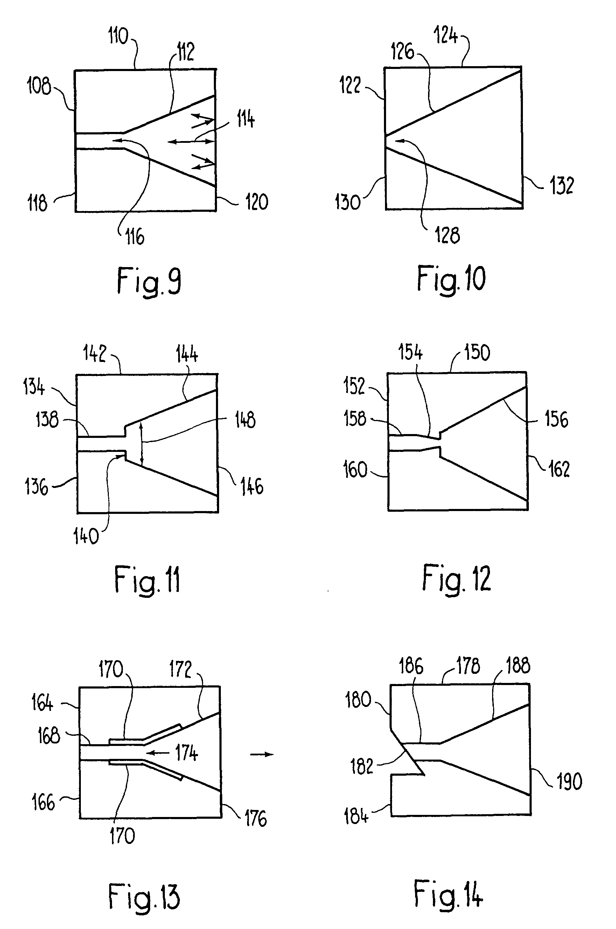

In den **Fig. 9** bis **18** werden mehrere Ausführungsformen von optischen Halbleiterverstärkern zum Einsatz in den optischen Sendesystemen dargestellt. Alle in den **Fig. 9** bis **18** dargestellten Halbleiterchips sind an den Eintritts- und Austrittsstellen für das zu verstärkende Licht mit einer reflexionsmindernden optischen Beschichtung versehen. Dabei ist beachtet, dass diese Beschichtungen entsprechend der Permittivitäten der aneinander anzupassenden Medien ausgeführt sind.

Der Halbleiterchip **110** in **Fig. 9** besitzt eine optische Wellenleiterstruktur, welche zum Teil aus einem Wellenleiter **118** besteht, welcher das Licht nur in einem einzigen Mode überträgt, sowie einen sich in Ausbreitungsrichtung des zu verstärkenden Lichts ausweitenden Wellenleiter **112**. Die Flächen **108** bzw. **120,** durch welche das zu verstärkende Licht in die Wellenleiterstruktur ein- bzw. austritt, sind mit einer reflexionsmindernden optischen Beschichtung versehen. Die Breite der schmalen Seite des Wellenleiters **112** ist an die des einmodigen Wellenleiters **118** angepasst.

Der Halbleiterchip **124** in **Fig. 10** besitzt kein einmodiges Wellenleiter-Segment. Er besitzt lediglich einen sich in Ausbreitungsrichtung des zu verstärkenden Lichts ausweitenden Wellenleiter **130**. Sowohl das schmalere Ende **128** als auch die breitere Öffnung des Wellenleiters **126** enden an mit einer reflexionsmindernden optischen Beschichtung versehenen Ein- bzw. Austrittsflächen **122** bzw. **132.**

Der Halbleiterchip **142** nach **Fig. 11** besitzt wiederum einen einmodigen Wellenleiter **138** sowie einen sich in Ausbreitungsrichtung des Lichtes aufweitenden Wellenleiter **144.** Der sich aufweitende Wellenleiter **144** besitzt jedoch an seiner schmalen Seite **140** eine Weite **148,** die grösser ist als die Weite des sich anschliessenden einmodigen Wellenleiters **138.** Die Aufweitung des sich aufweitenden Wellenleiters **144** geschieht im allgemeinen in linearer Abhängigkeit von der Länge des Wellenleiters **136** mit einem Faktor, der wenigstens der beugungsbedingten Aufweitung des zu verstärkenden Lichtstrahls entspricht, so dass dieser sich im innerhalb des Wellenleiters **136** befindlichen verstärkenden Medium unbeschränkt ausbreiten kann. Die Aufweitung des Wellenleiters **136** muss entlang seiner Länge nicht unbedingt linear erfolgen, sofern der sich aufweitende Lichtstrahl bei seiner Ausbreitung im Wellenleiter **144** nicht durch den Rand dieses Wellenleiters begrenzt wird. Eine Eintrittsfläche **134** sowie eine Austrittsfläche **146** für das zu verstärkende Licht sind mit einer reflexionsmindernden optischen Beschichtung versehen.

Die sich aufweitenden Wellenleiterteile **112, 126** und **144** in den **Fig. 9** bis **11** beinhalten ein optischen Gewinn erzeugendes Medium, wodurch die optische Leistung von zu verstärkendem Licht typischerweise während eines Durchlaufes von 5mW auf mehr als 1W angehoben wird, wobei die optische Leistungsdichte entlang der Länge des Wellenleiters konstant bleibt. Weiterhin erfolgt die Ausbreitung des zu verstärkenden Lichts in einem einzigen Mode, da infolge der konstanten optischen Leistungsdichte bei konstanter Dichte des Injektionsstroms im gewinnerzeugenden Medium der sich aufweitenden Wellenleiter keine Inhomogenitäten auftreten.

In **Fig. 12** ist ein Halbleiterchip **150** dargestellt, dessen Wellenleiterstruktur aus einem einmodigen Wellenleiterteil **158** eines Gesamtwellenleiters **160** besteht, der sich in einem Abschnitt **154** in seiner Breite reduziert, um anschliessend in die breitere Schmalseite eines sich in Ausbreitungsrichtung des zu verstärkenden Lichts ausweitenden Wellenleiterteils **156** zu münden. Wie in den vorangegangenen Ausführungen sind die Eintrittsfläche **152** sowie die Austrittsfläche **162** für das zu verstärkende Licht mit einer reflexionsmindernden optischen Beschichtung versehen.

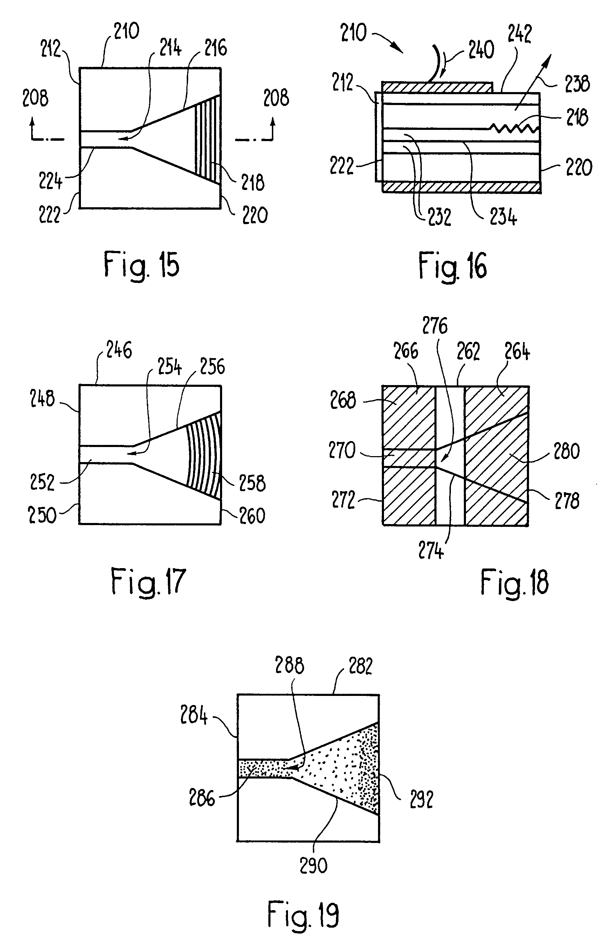

Eine weitere Struktur für einen optischen Halbleiterverstärker ist in **Fig. 13** dargestellt. Die Wellenleiterstruktur **166** besteht wie in **Fig. 9** aus einem einmodigen Segment **168** sowie einem in seiner Breite angepassten sich an seiner Schmalseite dem einmodigen Wellenleiterteil **168** anschliessenden sich aufweitenden Wellenleiterteil **172.** Die Eintrittsfläche **164** des zu verstärkenden Lichts sowie die Austrittsfläche **176** sind mit einer reflexionsmindernden optischen Beschichtung versehen. Zur Unterdrückung möglicher Eigenschwingungen wegen hoher optischer Verstärkung sowie unvollkommener Wirkung der reflexionsmindernden Beschichtung der Eintrittsfläche **164** und der Austrittsfläche **176** sind im Bereich des Übergangs zwischen den beiden Wellenleitern **172** und **168** verlustbehaftete Berandungen **170** angebracht, welche insbesondere das Ausbrechen von verstärktem und an der Austrittsfläche **176** reflektiertem Licht aus dem Wellenleiter **172** sowie dessen erneute Reflexion an der Eintrittsfläche **164** und dessen Rückkehr in den Wellenleiter **172** unterdrücken soll. Der geringe verbleibende Teil der reflektierten verstärkten Lichtleistung, welcher in eine durch das Ende des Wellenleiters **168** dargestellte Apertur **174** eintritt, reicht im allgemeinen nicht aus, um Eigenschwingungen des Verstärkers hervorzurufen.

Nach **Fig. 14** kann ein optischer Verstärker auch in Form eines Halbleiterchips **178** ausgeführt werden, welcher einen einmodigen Wellenleiterteil **186** und einen sich aufweitenden Wellenleiterteil **188** enthält. Die Eintrittsfläche **180** des zu verstärkenden Lichts sowie dessen Austrittsfläche **190** können mit einer reflexionsmindernden optischen Beschichtung versehen sein. Der Übergang des einmodigen Wellenleiterteils **186** zwischen dem Halbleiterchip **178** und der Umgebung ist eine ebene Fläche **182,** die zur Längsachse des einmodigen Wellenleiters **186** den sogenannten Brewsterwinkel einnimmt. Dadurch verschwindet für eine Polarisationsrichtung von in den einmodigen Wellenleiter **186** durch die Fläche **182** ein- oder ausgekoppeltem Licht der durch den Übergang zwischen zwei Medien verschiedener optischer Brechzahl sich ergebende Reflexionsfaktor unabhängig vom Vorhandensein einer reflexionsmindernden optischen Beschichtung der Fläche **182.** Handelt es sich beim einmodigen Wellenleiter **186** um eine Struktur mit geringem Unterschied der optischen Brechzahl im Verhältnis zum den Wellenleiter umgebenden Festkörper, wird an der Innenseite der Fläche **182** reflektiertes Licht sich zudem nicht in entgegengesetzter Richtung im einmodigen Wellenleiterteil **186** fortpflanzen.

Nach **Fig. 15** und **Fig. 16** kann in einem Halbleiterchip **210** auch ein sich aufweitender Wellenleiter **216** mit einem integrierten verstimmten optischen Gitter **218** vorhanden sein, das im Unterschied zur Emission der Lichtleistung aus der Seitenfläche **220** deren Emission aus der Oberfläche in Richtung des Pfeiles **238** bewirkt. Verstimmte Gitter besitzen eine periodische Änderung der optischen Brechzahl, die bewirkt, dass eingestrahltes Licht nicht entgegengesetzt der Einstrahlungsrichtung gestreut wird. Allerdings lässt sich mittels der Periode des Gitters die Richtung, in welche Licht gestreut wird, kontrollieren. Das verstimmte Gitter **218** befindet sich in relativer Nähe zur Austrittsfläche **220** des Halbleiterchips **210** und beugt das aus dem Wellenleiter **216** austretende Licht in Richtung der Oberseite **242** des Halbleiterchips und befindet sich, wie aus **Fig. 16** ersichtlich, welche einen Schnitt des Halbleiterchips nach **Fig. 15** entlang der Linie **208-208** darstellt, in der Nähe der Seitenfläche **220** am Rande einer der den Wellenleiter bildenden, eine aktive, optischen Gewinn erzeugende Zone **234** umschliessenden, eine höhere optische Brechzahl als der umgebende Halbleiter aufweisenden Schichten **232.**

**Fig. 17** zeigt einen Halbleiterchip **246** mit einem einmodigen Wellenleiterteil **252,** dessen innere Apertur **254** in das in seiner Breite an die Apertur **254** angepasste schmale Ende eines sich aufweitenden Wellenleiterteils **256** mündet. Die Eintrittsfläche **248** sowie die seitliche Austrittsfläche **260** des Halbleiterchips **246** sind mit einer reflexionsmindernden optischen Beschichtung versehen. Ein verstimmtes optisches Gitter **258** ist im Gegensatz zu dem in den **Fig. 15** und **16** ausgeführten Gitter **218** an den Verlauf der Phasenfronten der sich im aufweitenden Wellenleiterteil **256** ausbreitenden Lichtwellen angepasst. Hierdurch wird die Abstrahlung der verstärkten Lichtwelle in Form eines astigmatischen Lichtstrahls vermieden.

**Fig. 18** verdeutlicht die Möglichkeit, im Gegensatz zur bisher gemachten Voraussetzung keinen konstanten Speisestrom durch die optischen Gewinn erzeugende Halbleiterstruktur zu schicken. Ein Halbleiterchip **262** ist mit zwei voneinander getrennten Metallschichten **264** und **266** überzogen, über welche zwei im allgemeinen verschiedene elektrische Ströme **268** und **280** fliessen. Der Strom **268** wird einem optischen Gewinn erzeugenden Halbleiterübergang zugeführt, welcher sich innerhalb eines einmodigen Wellenleiters **270** befindet und in diesen über die Eintrittsfläche **272** eingekoppeltes Licht verstärkt. Das verstärkte Licht geht durch eine Zone **276** mit verschwindender Stromdichte in einen sich aufweitenden Wellenleiter **274** über, der in seinem sich an die Zone **276** anschliessenden, von der Metallschicht **264** überzogenem Teil vom Strom **280** durchflossen wird. Hier erfolgt die optische Verstärkung zur an der Austrittsfläche **278** austretenden optischen Ausgangsleistung des zu verstärkenden Lichts. Durch die stromfreie Zone **276** zwischen den beiden durch die Wellenleiter **270** und **274** sowie die Metallschichten **264** und **266** abgegrenzten stromdurchflossenen Wellenleitersegmenten wird im sich aufweitenden Wellenleiterteil **274** eine über die Wellenfront gleichmässige Verstärkung erzielt und dadurch eine höhere optische Ausgangsleistung sowie ein geringeres Rauschen des gesamtem optischen Verstärkers bewirkt. Die voneinander getrennten Metallschichten **264** und **268** ermöglichen zudem die Modulation des zu verstärkenden Lichts mit hoher Modulationsbandbreite, wenn zur Modulation des Lichts der Strom **268** gesteuert wird, während der erheblich grössere Strom **280** konstant gehalten wird. Die höhere Modulationsbandbreite ergibt sich aus der geringeren Kapazität des in den einmodigen Wellenleiter **270** integrierten Halbleiterübergangs. Neben Amplitudenmodulation ist durch die Steuerung des Stroms **268** auch Phasenmodulation möglich, da mit dem Strom **268** auch die Ladungsträgerdichte des Halbleitermaterials innerhalb des einmodigen Wellenleiters **270** und damit dessen optischen Brechzahl beeinflusst wird, wodurch sich die Phase des aus dem einmodigen Wellenleiter **270** austretenden Lichts ändert. Die entgegengesetzte Modulation des Stroms mehrerer hintereinandergefügter einmodiger Wellenleitersegmente verschiedener Länge und Dotierung kann die dabei parasitär auftretende Amplitudenmodulation gering halten.

Wie in **Fig. 19** dargestellt, kann zur Erzielung unterschiedlicher optischer Verstärkung innerhalb einer aus mehreren Wellenleitern bestehenden Struktur auch die Leitfähigkeit des über dem optischen Gewinn erzeugenden Halbleiterübergang befindlichen Halbleitermaterials beeinflusst werden. Ein Halbleiterchip **282** beinhaltet einen einmodigen Wellenleiter **286** sowie einen sich anschliessenden, sich aufweitenden Wellenleiter **290.** Vor Abdeckung durch eine in **Fig. 19** nicht dargestellte Metallschicht wird die Leitfähigkeit der Oberfläche des Halbleiterchips **282** im Bereich der Wellenleiter **286** und **290** durch Protonen-Implantation hergestellt. Hierbei erlaubt die Verwendung entsprechender Masken eine kontinuierliche Verteilung der Leitfähigkeit auf der Oberfläche des Halbleiterchips **282,** die in **Fig. 19** durch die Dichte einer Punktierung innerhalb des Gebiets der Wellenleiter **286** und **290** angedeutet ist. Wird an die sich über dem Halbleiterchip **282** zu denkende Metallschicht eine konstante elektrische Spannung angelegt, ergibt sich eine entsprechende Verteilung der elektrischen Stromdichte durch den in den beiden Wellenleitern **286** und **290** befindlichen, optischen Gewinn erzeugenden Halbleiterübergang. Im dargestellten Beispiel folgt aufgrund der dichten Punktierung für den einmodigen Wellenleiter **286** ein hoher optischer Gewinn und daraus resultierend eine verhältnismässig hohe optische Sättigungsleistung, welche in eine schmale Seite **288** des sich aufweitenden Wellenleiters **290** eintritt. Die Stromdichte im linken Teil des sich aufweitenden Wellenleiters **290** ist verhältnismässig niedrig eingestellt, um entlang des Querschnitts durch relative Schwankung der Ladungsträgerdichte oder durch thermische Schwankungen bedingte Verzerrungen der Phase und der Amplitude der Wellenfront zu minimieren. Im rechten Teil des sich aufweitenden Wellenleiters **290** ist eine höhere Stromdichte vorgesehen, da sich nun Störungen der Wellenfront entlang einer längeren Apertur weniger stark auswirken. In unmittelbarer Nähe einer Entrittsfläche **284** und einer Austrittsfläche **292** des zu verstärkenden Lichts ist die Leitfähigkeit erniedrigt, um durch eine geringe Stromdichte die thermische Belastung des Materials zu reduzieren und damit die Lebensdauer der reflexionsmindernden optischen Beschichtung der Eintrittsfläche **284** sowie der Austrittsfläche **292** zu erhöhen.

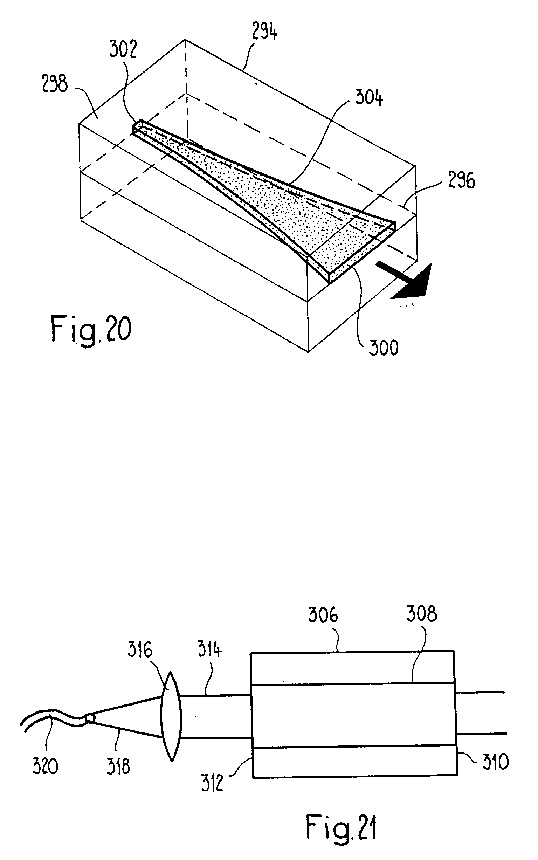

**Fig. 20** gibt Einblick in einen Halbleiterchip **294,** welcher in der Ebene **296** eines optischen Gewinn erzeugenden Halbleiterübergangs einen sich exponentiell aufweitenden Wellenleiter **304** aufweist. Während die anhand der vorangegangenen Figuren beschriebenen sich aufweitenden Wellenleiter sich über ihre Länge linear aufweiten, prinzipiell aber nur dem Gebot gehorchen, die aus einem schmalen einmodigen Wellenleiter eingekoppelte Lichtwelle nur in einer Dimension zu führen, orthogonal hierzu hingegen deren ungehinderte Aufweitung zuzulassen, führt der in **Fig. 20** dargestellte Wellenleiter die Lichtwelle in zwei Dimensionen. Durch eine exponentielle Aufweitung des Wellenleiters **304,** die sich exakt an der in diesem Wellenleiter erzielten optischen Verstärkung orientiert, kann die optische Leistungsdichte wie auch die Stromdichte entlang des optischen Gewinn erzeugenden Halbleiterübergangs prinzipiell besser konstant gehalten werden. Eine Eintrittsöffnung **302** sowie eine Austrittsöffnung **300** des Wellenleiters **304** können mit einer reflexionsmindernden optischen Beschichtung versehen werden. Eine zur Zuführung von elektrischem Strom notwendige Metallschicht kann derart über dem optischen Wellenleiter **304** ausgeführt werden, dass der Wellenwiderstand dieser als Hochfrequenz-Streifenleitung verwendeten Metallschicht über die Länge des durch sie bedeckten optischen Wellenleiters **304** exponentiell sinkend verläuft und damit trotz eines sich ändernden Wellenwiderstands keine Reflexion auftritt. Entspricht insbesondere die Gruppengeschwindigkeit eines in Richtung **298** eingespeisten schnellen elektrischen modulierenden Signals derjenigen des sich im darunter befindlichen optischen Wellenleiter fortpflanzenden zu verstärkenden Lichts, kann in Anlehnung an Wanderwellen-Phasenmodulatoren eine effiziente Phasenmodulation des zu verstärkenden Lichts bei gleichzeitig hoher Modulationsbandbreite erzielt werden.

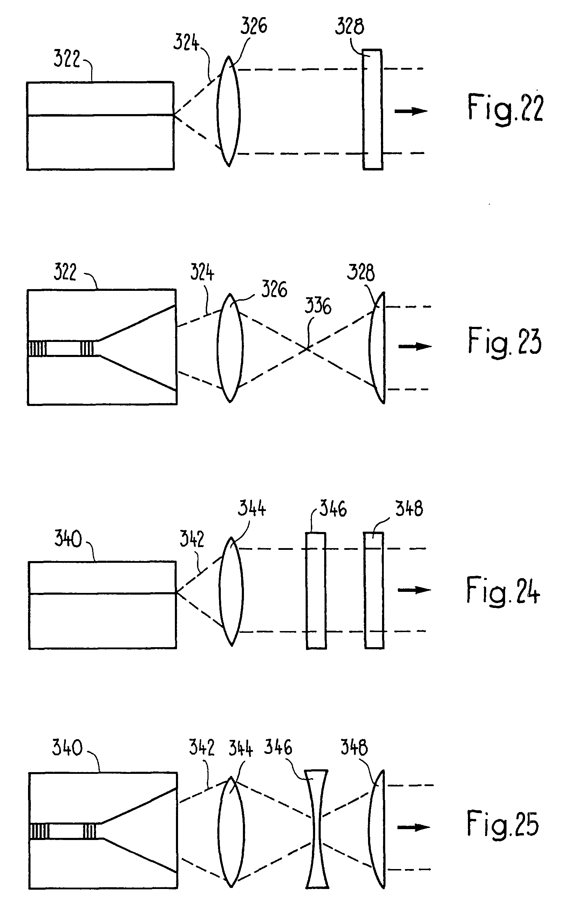

In **Fig. 21** ist ein optischer Verstärker dargestellt, welcher einen einzigen, sehr breiten optischen Wellenleiter beinhaltet. Ein in einen Halbleiterchip **306** eingefügter optischer Wellenleiter **308,** welcher auch einen optische Verstärkung erzeugenden Halbleiterübergang beinhaltet, überschreitet in seiner Breite die Breite eines kollimierten astigmatischen Lichtstrahls **314,** der den optischen Wellenleiter **308** durchstrahlt. Der kollimierte astigmatische Lichtstrahl **314** wird mittels eines optischen Linsensystems **316** aus einem durch das Ende eines Lichtwellenleiters **320** abgestrahlten divergenten Lichtstrahl **318** gewonnen. Der durch eine reflexionsmindernd beschichtete Eintrittsfläche **312** in den optischen Wellenleiter **308** eintretende kollimierte Lichtstrahl **314** verlässt durch eine reflexionsmindernd beschichtete Austrittsfläche **310** den Wellenleiter **308** und kann durch ein weiteres Linsensystem **316** wieder in Lichtwellenleiter eingekoppelt werden.

Der von den Austrittsseiten der Halbleiterchips ausgehende, stark astigmatische Lichtstrahl wird mittels der in den **Fig. 22** bis **25** dargestellten Linsensysteme in einen kollimierten Lichtstrahl gleichmässiger seitlicher Ausdehnung umgesetzt werden.

In **Fig. 22** und **Fig. 23** wird ein divergenter, astigmatischer Lichtstrahl **324** aus einem Halbleiterchip **322** durch eine Linse **326** in einen in der Richtung einer zur Längsseite der abstrahlenden Apertur parallelen Querachse kollimierten Lichtstrahl übergeführt, der sich in der in **Fig. 23** dargestellten Blickrichtung längs einer zur vorgenannten Querachse orthogonalen Querachse in einer Brennlinie **336** konzentriert. Dieser Lichtstrahl wird durch eine nachfolgende Zylinderlinse **328** vollständig kollimiert.

Nach den **Fig. 24** und **25** kann ein astigmatischer divergenter Lichtstrahl **342** aus einem Halbleiterchip **340** durch eine Linse **344** zunächst in einer Querachsenrichtung kollimiert werden, um eine anschliessende vollständige Kollimation des Lichtstrahls durch ein aus den Zylinderlinsen **346** und **348** bestehendes System zu bewirken. Die aus **Fig. 25** ersichtliche Kombination einer konkaven mit einer konvexen Linse bewirkt eine von Teleobjektiven für Photoapparate bekannte Verkürzung der erforderlichen Länge des optischen Systems. In allen in den **Fig. 22-25** abgehandelten optischen Systemen können alternativ auch Linsen mit asphärischer Oberfläche eingesetzt werden, weiterhin können diese Systeme aus Medien mit angepasstem Verlauf der optischen Brechzahl bestehen.

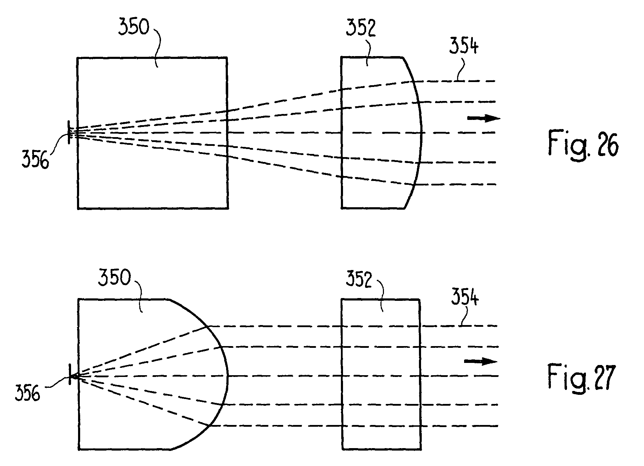

**Fig. 26** zeigt eine erfindungsgemässe Variante als Ausführungsbeispiel, nämlich die Aufsicht eines optischen Systems zur Erzeugung eines kollimierten Lichtstrahls **354** mit gleichmässiger seitlicher Ausdehnung aus einer stark astigmatisch abstrahlenden Apertur **356** durch Zylindersammellinsen **350** und **352,** welche mit azylindrisch gekrümmter Oberfläche ausgeführt sein können.

**Fig. 27** zeigt dasselbe System in Seitenansicht.

## Patentansprüche

1. Verfahren zum Betreiben eines Laser-Sendesystems zum Einsatz in optischen Freiraum-Kommunikationssystemen, insbesondere in Kombination mit dem Erzeugen verstärkten Laserlichts unter Weltraumbedingungen,
wobei mittels eines elektrooptischen Modulators (**26**) moduliertes zur Kommunikation bestimmtes Laserlicht optischen Halbleiterverstärkern **(6, 18, 30, 46, 62)** zugeführt wird, die zur optischen Verstärkung und Phasen- oder Amplitudenmodulation von Licht ausgebildet sind und Halbleiterchips **(110, 124, 142, 150, 166, 178, 210, 246, 262, 282, 306)** aufweisen, welche optische Wellenleiterstruktur besitzen,
wobei für diese ein mit einem verstärkenden Mittel ausgerüsteter optischer Wellenleiter **(118, 130, 136, 160, 166, ....., 312)** verwendet wird, der sich längs der Ausbreitungsrichtung von in ihm geführten Lichtwellen in seinem Querschnitt ändert, und
wobei dieser optische Wellenleiter **(118, 130, 136, 160, 166, 304, 312)** von einer diesem verstärkenden Mittel elektrische Energie zuführenden elektrisch leitfähigen Schicht **(240, 264, 266)** überzogen ist, welche als elektrische Wanderwellenleitung ausgebildet ist, die ihren Wellenwiderstand längs der Ausbreitungsrichtung der sich mit möglichst gleicher Gruppengeschwindigkeit parallel bewegenden Lichtwelle reflexionsfrei ändert.

2. Verfahren nach Anspruch **1, dadurch gekennzeichnet, dass** eine Lasereinheit **(2, 14, 22, 38, 54)** über polarisationserhaltende optische Fasern **(4, 16, 24, 40, 56)** mit dem Eingang eines optischen Halbleiterverstärkers **(6, 18, 30, 46, 62)** verbunden ist und wahlweise am Ausgang desselben kollimierte Ausgangslichtstrahlen **(12, 36, 52, 72, 78, 106)** erzeugende Mittel **(10, 34, 76, 80, 100)** oder weitere polarisationserhaltende optische Mittel **(20, 48)** vorhanden sind.

3. Anordnung zur Durchführung des Verfahrens nach Anspruch **1** oder **2** mit einem Laser **(2, 14, 22, 38, 54),** optischen Halbleiterverstärkern **(6, 18, 30, 46, 62)** und einem elektrooptischen Modulator **(26)** zur Modulation von Laserlicht, **dadurch gekennzeichnet, dass** die optischen Halbleiterverstärker Halbleiterchips **(110, 124, 142, 150, 166, 178, 210, 246, 262, 282, 306)** aufweisen, welche optische Wellenleiterstruktur besitzen, dass die optischen Halbleiterverstärker **(6, 18, 30, 46, 62)** zur optischen Verstärkung und Phasen- oder Amplitudenmodulation von Licht ausgebildet sind, und
dass der mit einem verstärkenden Mittel ausgerüstete sich längs der Ausbreitungsrichtung von in ihm geführten Lichtwellen in seinem Querschnitt ändernde optische Wellenleiter der Halbleiterchips (**118**, **130, 136, 160, 166, 304, 312)** von einer diesem verstärkenden Mittel **(304)** elektrische Energie zuführenden elektrisch leitfähigen Schicht **(240, 264, 266)** überzogen ist, welche als elektrische Wanderwellenleitung ausgebildet ist, die ihren Wellenwiderstand längs der Ausbreitungsrichtung der sich mit möglichst gleicher Gruppengeschwindigkeit parallel bewegenden Lichtwelle reflexionsfrei ändert.

4. Anordnung nach Anspruch **3, dadurch gekennzeichnet, dass** eine Lasereinheit **(2, 14, 22, 38, 54)** über polarisationserhaltende optische Fasern **(4, 16, 24, 40, 56)** mit dem Eingang eines optischen Halbleiterverstärkers **(6, 18, 30, 46, 62)** verbunden ist und wahlweise am Ausgang desselben kollimierte Ausgangslichtstrahlen **(12, 36, 52, 72, 78, 106)** erzeugende Mittel **(10, 34, 76, 80, 100)** oder weitere polarisationserhaltende optische Mittel **(20, 48)** vorhanden sind.

5. Anordnung nach Anspruch **3** oder **4, dadurch gekennzeichnet, dass** zur Erzeugung von kollimierten Strahlen **(12, 36, 72, 78, 106; 74, 104)** den optischen Halbleiterverstärkern **(6, 18, 26, 46, 62)** Mittel **(10, 34)** nachgeschaltet und/oder Korrektur-Einrichtungen **(80, 100)** einschaltbar sind.

6. Anordnung nach einem der Ansprüche **3** bis **5, dadurch gekennzeichnet, dass** der optische Halbleiterverstärker **(46, 62)** mehrere redundant aufgebaute Halbleiterverstärker aufweist, und dass dem optischen Halbleiterverstärker **(46, 62)** jeweils ein elektromechanischer Umschalter **(42, 58)** für Lichtwellenleiter vor- und ein weiterer elektromechanischer oder elektrooptischer Umschalter **(50, 70)** für die Lichtwellenleiter nachgeschaltet ist.

7. Anordnung nach Anspruch **6, dadurch gekennzeichnet, dass** die elektromechanischen oder elektrooptischen Umschalter **(50; 70)** für die Lichtwellenleiter durch Sternkoppler ersetzt sind.

8. Anordnung nach einem der Ansprüche **3 bis 6, dadurch gekennzeichnet, dass** zur Erzeugung von kollimierten Ausgangslichtstrahlen **(72, 78, 106)** ein elektrooptischer Umschalter **(70)** vorhanden ist, bei dem über eine linear angeordnete Reihe von Polarisationsstrahlteilern **(76)** in Kombination mit zwischen den Polarisationsstrahlteilern **(76)** rotationssymmetrisch angeordneten optischen Halbwellenplatten **(80; 100)** die Polarisation drehbar ist.

9. Anordnung nach Anspruch **8, dadurch gekennzeichnet, dass** die Polarisationsstrahlteiler **(76)** die Eigenschaft besitzen, an einer sich in ihrem Innenbereich befindenden Grenzfläche Licht in Abhängigkeit von seiner Polarisation zu reflektieren oder in seiner Ausbreitung nicht zu beeinträchtigen, und dass die Halbwellenplatten **(80)** zwischen den Polarisationsstrahlteilern **(76)** gebracht werden, indem durch ein Servomotor **(84)** eine Achse **(82)** gedreht wird, an welcher die Halbwellenplatten **(80)** angebracht sind, um sie gegeneinander auf Kreisflächen verdreht um die Achse **(82)** zu bewegen.

10. Anordnung nach Anspruch **5, dadurch gekennzeichnet, dass** Halbwellenplatten **(100)** auf linear, zwischen Polaritätsstrahlteilern **(102)** angeordneten Schienen **(98)** geführt und mit Pleuelstangen **(96)** eines Kurbelwellengetriebes **(90, 92, 94)** verbunden sind.

11. Anordnung nach einem der Ansprüche **3** bis **10, dadurch gekennzeichnet, dass** die optischen Halbleiterverstärker **(6, 18, 30, 46, 62)** durch Halbleiterchips (**110, 124, 142, 150, 166, 178, 210, 246, 262, 282, 306, 322, 340)** gebildet sind, deren Eintritts- **(312)** und Austrittsflächen (310) reflexionsmindernd beschichtet sind.

12. Anordnung nach einem der Ansprüche **3** bis **11, dadurch gekennzeichnet, dass** den Halbleiterchips **(322, 340)** optische Linsensysteme **(326, 328, 344, 346, 348)** nachgeschaltet sind, durch die die stark astigmatische Ausgangsstrahlung in einen kollimierten Lichtstrahl gleichmässiger seitlicher Ausdehnung umsetzbar ist.

13. Anordnung nach Anspruch **12, dadurch gekennzeichnet, dass** das optische Linsensystem **(326, 328, 344, 346, 348)** aus zwei Zylindersammellinsen **(350, 352)** besteht, die eine azylindrisch gekrümmte Oberfläche aufweisen.

14. Anordnung nach einem der Ansprüche **3 bis 13, dadurch gekennzeichnet, dass** ein Halbleiterchip **(142)** einen einmodigen Wellenleiter **(138; 270; 286)** oder einen einmodigen Wellenleiterteil **(168)** sowie einen sich in Ausbreitungsrichtung des Lichtes aufweitenden Wellenleiter **(144; 172; 252)** aufweist.

15. Anordnung nach Anspruch **5, dadurch gekennzeichnet, dass** in einem Halbleiterchip **(210)** ein sich aufweitender Wellenleiter **(216)** mit einem integrierten verstimmten optischen Gitter **(218)** versehen ist, um zu bewirken, dass eingestrahltes Licht nicht entgegengesetzt der Einstrahlungsrichtung gestreut wird, und um mittels der Periode des Gitters die Richtung, in welche Licht gestreut wird, zu kontrollieren.

## Claims

1. Method for operating a laser transmitting system for use in optical free space communication systems, more particularly in combination with the generation of amplified laser light in cosmic space conditions,
modulated laser light intended for communication being supplied by means of an electro-optical modulator (26) to optical semiconductor amplifiers (6, 18, 30, 46, 62) which are configured for the optical amplification and phase or amplitude modulation of light and incorporate semiconductor chips (110, 124, 142, 150, 166, 178, 210, 246, 262, 282, 306) possessing an optical waveguide structure,
there being used for the latter an optical waveguide (118, 130, 136, 160, 166, ..., 312) equipped with an amplifying means, which waveguide varies in cross-section along the propagation route of light waves conveyed in it, and
said optical waveguide (118, 130, 136, 160, 166, 304, 312) being coated with an electro-conductive layer (240, 264, 266) which supplies electrical energy to said amplifying means and which is in the form of an electrical flat line which varies its characteristic impedance in a reflectionless manner along the propagation route of the light wave travelling in parallel at as uniform a group velocity as possible.

2. Method according to claim 1, **characterised in that** a laser unit (2, 14, 22, 38, 54) is connected via polarisation-receiving optical fibres (4, 16, 24, 40, 56) to the input of an optical semiconductor amplifier (6, 18, 30, 46, 62), and means (10, 34, 76, 80, 100) which generate collimated output light beams (12, 36, 52, 72, 78, 106), or further polarisation-receiving optical means (20, 48), are present at the output of said optical semiconductor amplifier, as required.

3. Arrangement for carrying out the method according to claim 1 or 2, having a laser (2, 14, 22, 38, 54), optical semiconductor amplifiers (6, 18, 30, 46, 62) and an electro-optical modulator (26) for modulating laser light, **characterised in that** the optical semiconductor amplifiers have semiconductor chips (110, 124, 142, 150, 166, 178, 210, 246, 262, 282, 306) possessing an optical waveguide structure,
that the optical semiconductor amplifiers (6, 18, 30, 46, 62) are configured for optical amplification and phase or amplitude modulation of light, and
that the optical waveguide of the semiconductor chips (118, 130, 136, 160, 166, 304, 312) which is equipped with a means of amplification and varies in cross-section along the propagation route of light waves conveyed in it is coated with an electro-conductive layer (240, 264, 266) which supplies electrical energy to said means of amplification (304) and is in the form of an electrical flat line which varies its characteristic impedance in a reflectionless manner along the propagation route of the light wave travelling in parallel at as uniform a group velocity as possible.

4. Arrangement according to claim 3, **characterised in that** a laser unit (2, 14, 22, 38, 54) is connected via polarisation-receiving optical fibres (4, 16, 24, 40, 56) to the input of an optical semiconductor amplifier (6, 18, 30, 46, 62), and means (10, 34, 76, 80, 100) which generate collimated output light beams (12, 36, 52, 72, 78, 106), or further polarisation-receiving optical means (20, 48), are present at the output of said optical semiconductor amplifier, as required.

5. Arrangement according to claim 3 or 4, **characterised in that** for the generation of collimated beams (12, 36, 72, 78, 106; 74, 104) means (10, 34) are connected downstream of the optical semiconductor amplifiers (6, 18, 26, 46, 62) and/or correction devices (80, 100) can be inserted.

6. Arrangement according to any of claims 3 to 5, **characterised in that** the optical semiconductor amplifier (46, 62) has a plurality of redundantly constructed semiconductor amplifiers, and that an electromechanical changeover switch (42, 58) for optical waveguides and a further electromechanical or electro-optical changeover switch (50, 70) for the optical waveguides, are connected respectively upstream and downstream of the optical semiconductor amplifier (46, 62).

7. Arrangement according to claim 6, **characterised in that** the electromechanical or electro-optical changeover switches (50; 70) for the optical waveguides are replaced with star couplers.

8. Arrangement according to any of claims 3 to 6, **characterised in that** for the generation of collimated output light beams (72, 78, 106) an electro-optical changeover switch (70) is present which enables the polarisation to be rotated via a linearly disposed row of polarisation beam dividers (76) in combination with optical half-wave plates (80; 100) disposed in a rotationally symmetrical manner between the polarisation beam dividers (76).

9. Arrangement according to claim 8, **characterised in that** the polarisation beam dividers (76) possess the characteristic of reflecting light in dependence on its polarisation at a boundary surface situated in the inner zone of said polarisation beam dividers (76) or of not adversely affecting the propagation of said light, and that the half-wave plates (80) are brought between the polarisation beam dividers (76) by a servomotor (84) turning a shaft (82) on which the half-wave plates (80) are mounted, in order to move them twisted on circular surfaces in relation to one another about the shaft (82).

10. Arrangement according to claim 5, **characterised in that** half-wave plates (1001 are set on rails (98) disposed linearly between polarity beam dividers (102) and are joined to connecting rods (96) of a crankshaft transmission (90, 92, 94).

11. Arrangement according to any of claims 3 to 10, **characterised in that** the optical semiconductor amplifiers (6, 18, 30, 46, 62) are constituted by semiconductor chips (110, 124, 142, 150, 166, 178, 210, 246, 262, 282, 306, 322, 340) whose entry surfaces (312) and exit surfaces (310) are coated in a way that minimises reflection.

12. Arrangement according to any of claims 3 to 11, **characterised in that** connected downstream of the semiconductor chips (322, 340) are optical lens systems (326, 328, 344, 346, 348) which enable the highly astigmatic output radiation to be converted into a collimated light beam with uniform lateral expansion.

13. Arrangement according to claim 12, **characterised in that** the optical lens system (326, 328, 344, 346, 348) consists of two cylindrical collecting lenses (350, 352) which have an acylindrically curved surface.

14. Arrangement according to any of claims 3 to 13, **characterised in that** a semiconductor chip (142) has a monomode waveguide (138; 270; 286) or a monomode waveguide element (168) and a waveguide (144; 172; 252) which widens in the direction in which the light is propagated.

15. Arrangement according to claim 5, **characterised in that** present in a semiconductor chip (210) is a widening waveguide (216) with an integrated detuned optical gate (218) in order to cause irradiated light not to be scattered in the opposite direction to the direction of irradiation, and in order, by means of the period of the gate, to check the direction in which light is being scattered.

## Revendications

1. Procédé destiné à l'exploitation d'un système d'émission par laser devant être utilisé dans des systèmes de communication optique dans l'espace libre, et combiné notamment à la production de lumière laser amplifiée dans les conditions de l'espace extra-atmosphérique,
dans lequel de la lumière laser modulée destinée à la communication est amenée, à l'aide d'un modulateur électrooptique **(26),** à des amplificateurs optiques à semi-conducteurs **(6, 18, 30, 46, 62)** conçus pour l'amplification optique et la modulation de la phase et de l'amplitude de la lumière et comportant des puces semi-conductrices **(110, 124, 142, 150, 166, 178, 210, 246, 262, 282, 306)** ayant une structure à guide d'ondes optique,
dans lequel un guide d'ondes optique **(118, 130, 136, 160, 166, ..., 312)** comportant un milieu amplifiant est utilisé pour ces puces semi-conductrices, sa section transversale se modifiant le long de la direction de propagation des ondes lumineuses qu'il guide, et
dans lequel ce guide d'ondes optique **(118, 130, 136, 160, 166, 304, 312)** est recouvert d'une couche conductrice **(240, 264, 266)** amenant de l'énergie électrique à ce milieu amplifiant, cette couche étant conçue comme un conducteur pour ondes progressives, dont l'impédance caractéristique se modifie sans réflexion le long de la direction de propagation de l'onde lumineuse évoluant parallèlement avec une vitesse de groupe si possible égale.

2. Procédé conforme à la revendication **1, caractérisé en ce qu'**une unité laser **(2, 14, 22, 38, 54)** est reliée à l'entrée d'un amplificateur optique à semi-conducteurs **(6, 18, 30, 46, 62)** par le biais de fibres optiques conservant la polarisation **(4, 16, 24, 40, 56)** et qu'à la sortie se trouvent soit des dispositifs **(10, 34, 76, 80, 100)** créant des faisceaux lumineux de sortie collimatés **(12, 36, 52, 72, 78, 106)** soit d'autres dispositifs optiques **(20, 48)** conservant la polarisation.

3. Agencement destiné à réaliser le procédé conforme à la revendication **1** ou **2** avec un laser **(2, 14, 22, 38, 54),** des amplificateurs optiques à semi-conducteurs **(6, 18, 30, 46, 62)** et un modulateur électrooptique **(26)** servant à moduler la lumière laser, **caractérisé en ce que** les amplificateurs optiques à semi-conducteurs comportent des puces semi-conductrices **(110, 124, 142, 150, 166, 178, 210, 246, 262, 282, 306)** ayant une structure à guide d'ondes optique, **en ce que** les amplificateurs optiques à semi-conducteurs **(6, 18, 30, 46, 62)** sont conçus pour l'amplification optique et la modulation de la phase ou de l'amplitude de la lumière, et
**en ce que** le guide d'ondes optique **(118, 130, 136, 160, 166, 304, 312)** des puces semi-conductrices, contenant un milieu amplifiant et dont la section transversale se modifie le long de la direction de propagation des ondes lumineuses qu'il guide, est recouvert d'une couche conductrice **(240, 264, 266)** amenant l'énergie électrique à ce milieu amplifiant **(304)** et conçue comme un conducteur électrique pour ondes progressives, dont l'impédance caractéristique se modifie sans réflexion le long de la direction de propagation de l'onde lumineuse évoluant parallèlement avec une vitesse de groupe si possible égale.

4. Agencement conforme à la revendication **3, caractérisé en ce qu'**une unité laser **(2, 14, 22, 38, 54)** est reliée à l'entrée d'un amplificateur à semi-conducteurs **(6, 18, 30, 46, 62)** par le biais de fibres optiques conservant la polarisation **(4, 16, 24, 40, 56)** et qu'à la sortie se trouvent soit des dispositifs **(10, 34, 76, 80, 100)** créant des faisceaux lumineux de sortie collimatés **(12, 36, 52, 72, 78, 106)** soit d'autres dispositifs optiques **(20, 48)** conservant la polarisation.

5. Agencement conforme à la revendication **3** ou **4, caractérisé en ce que,** afin des créer des faisceaux collimatés **(12, 36, 72, 78, 106 ; 74, 104),** des dispositifs **(10, 34)** sont connectés à la suite des amplificateurs optiques à semi-conducteurs **(6,18, 26, 46, 62)** et/ou qu'il est possible d'intercaler des mécanismes de correction **(80,100).**

6. Agencement conforme à l'une des revendications **3** à **5, caractérisé en ce que** l'amplificateur optique à semi-conducteurs **(46, 62)** comprend plusieurs amplificateurs à semi-conducteurs montés de façon redondante, et qu'un inverseur électromécanique **(42, 58)** pour guide d'ondes lumineuses est connecté en avant de l'amplificateur optique à semi-conducteurs **(46, 62)** tandis qu'un autre inverseur électromécanique ou électrooptique **(50, 70)** pour guide d'ondes lumineuses est connecté après l'amplificateur optique à semi-conducteurs **(46, 62)**.

7. Agencement conforme à la revendication **6, caractérisé en ce que** les inverseurs électromécaniques ou électrooptiques **(50 ; 70)** pour guides d'ondes lumineuses sont remplacés par des coupleurs en étoile.

8. Agencement conforme à l'une des revendications **3** à **6, caractérisé en ce qu'**il y a un inverseur électrooptique **(70)** destiné à produire des faisceaux lumineux de sortie collimatés **(72, 78, 106),** avec lequel il est possible de faire pivoter la polarisation par le biais d'une série, disposée de façon linéaire, de séparateurs de faisceau à polarisation **(76),** combinés à des lames demi-onde optiques **(80** ; **100)** à symétrie de révolution placées entre les séparateurs de faisceau à polarisation **(76)**.

9. Agencement conforme à la revendication **8, caractérisé en ce que** les séparateurs de faisceau à polarisation **(76)** ont la caractéristique de réfléchir la lumière, en fonction de sa polarisation, sur une surface limite se trouvant dans leur zone intérieure, ou de ne pas faire obstacle à sa propagation, et **en ce que** les lames demi-onde **(80)** sont amenées entre les séparateurs de faisceau à polarisation **(76),** un servomoteur **(84)** faisant tourner un axe **(82)** sur lequel sont placées les lames demi-onde **(80),** afin de les faire pivoter autour de l'axe **(82)** sur des surfaces circulaires, avec une torsion l'une par rapport à l'autre.

10. Agencement conforme à la revendication **5, caractérisé en ce que** des lames demi-onde **(100)** sont guidées sur des rails **(98)** disposés de façon linéaire entre des séparateurs de faisceau à polarisation **(102)** et sont reliées par des bielles **(96)** à un engrenage à vilebrequin **(90, 92, 94).**

11. Agencement conforme à l'une des revendications **3** à **10, caractérisé en ce que** les amplificateurs optiques à semi-conducteurs **(6, 18, 30, 46, 62)** sont formés de puces semi-conductrices **(110, 124, 142, 150, 166, 178, 210, 246, 262, 282, 306, 322, 340)** dont les surfaces d'entrée **(312)** et de sortie **(310)** sont revêtues d'une couche atténuant la réflexion.

12. Agencement conforme à l'une des revendications **3** à **11, caractérisé en ce que** des systèmes de lentilles optiques **(326, 328, 344, 346, 348)** sont connectés en aval des puces semi-conductrices **(322, 340),** et permettent de convertir le rayonnement de sortie, fortement astigmatique, en un faisceau lumineux collimaté s'étendant latéralement de façon régulière.

13. Agencement conforme à la revendication **12, caractérisé en ce que** le système de lentille optique **(326, 328, 344, 346, 348)** est constitué de deux lentilles cylindriques convergentes **(350, 352)** présentant une surface courbe non cylindrique.

14. Agencement conforme à l'une des revendications **3** à **13, caractérisé en ce qu'**une puce semi-conductrice **(142)** comporte un guide d'ondes monomode **(138 ; 270 ; 286)** ou une partie de guide d'ondes monomode **(168),** ainsi qu'un guide d'ondes **(144 ; 172** ; **252)** s'élargissant en direction de propagation de la lumière.

15. Agencement conforme à la revendication **5, caractérisé en ce que,** dans une puce semi-conductrice **(210),** un guide d'ondes à évasement **(216)** est muni d'une grille optique intégrée désaccordée **(218),** dont le but est que la lumière incidente ne se disperse pas dans la direction opposée à la direction du rayonnement incident et que l'on puisse contrôler la direction dans laquelle la lumière se disperse grâce à la période de la grille.
